# EUROPEAN PATENT APPLICATION

(11) **EP 2 832 225 A2**
(43) Date of publication of application: **04.02.2015**
(21) Application number: 14178184.9
(22) Date of filing: 23.07.2014
(51) Int. Cl.: A21D 2/18, A21D 6/00, A21D 10/02, A21D 13/06

(54) **Reduced saturated and total fat content pie crusts**

(30) Priority: 01.08.2013 US 201313956985
(71) Applicant: Corn Products Development, Inc., Jabaquara 04311-000 São Paulo (BR)
(72) Inventor: Motwani, Tamuj, Bakersfield, CA 93307 (US); Uzunalioglu, Dilek, Bridgewater, NJ 08807 (US); Martin, Alicia, Bridgewater, NJ 08807 (US); Shah, Himanshu, Branchburg, NJ 08876 (US)
(74) Representative: Meissner, Bolte & Partner GbR

(57) **Abstract**

The application relates to a composition comprising from about 2% (w/w) to about 4% (w/w) alkenyl succinic anhydride substituted starch, from about 3% (w/w) to about 8% (w/w) heat-moisture treated wheat flour, from about 5% (w/w) to about 7% (w/w) vegetable oil, and from about 78% (w/w) to about 87% (w/w) of other conventional baking ingredients. In one embodiment the composition is in the form of a pie crust.

## Description

### INTRODUCTION

Pie is a baked dish which is usually made of a pastry dough casing that covers or completely contains a filling of various sweet or savory ingredients. The pastry dough casing, which forms the outside of a pie, is known as the crust. A filled pie (also known as single-crust or bottom-crust), has pastry dough lining the baking dish, and the filling is placed on top of the pastry, but left open. A top-crust pie, which may also be called a cobbler, has the filling in the bottom of the dish and the filling covered with a pastry dough or other covering before baking. A dual-crust pie has the filling completely enclosed in the pastry shell. Pies can be a variety of sizes, ranging from bite-size to ones designed for multiple servings.

Pastry dough is made of a mixture at minimum of flour, fat, and water. One use of pastry dough is to encase or cover food in the form of pies. Pastry is generally dry, delicate, and flaky after baking. The delicacy and flakiness of a pastry is determined by how much the dough is mixed, the thickness of the dough, the amount of fat used, and the melting properties of the fat. A pie crust, for instance, is delicate due to the relatively low amount of mixing, which produces a lower level of gluten. A pie crust can be flaky if it has a high fat to flour ratio. Old-style pie crusts made from traditional pastry dough can be bland, flakey, and somewhat greasy.

Pies made with sweet, viscous, liquid-based fillings such as custard or fruit purees, serve as popular desserts items. The distinguishing textural attributes of a pie crust are flakiness and tenderness. Flakiness is imparted by the layering effect developed between the flour and the fat in the pie crust dough, while tenderness arises because fat melts into dough and locks moisture in the system during baking. For this reason, fat is an important functional ingredient and is added in the range of 20% to 100% (on percentage flour basis) in the pie dough. (Zelch R, Sieloff T, Lehmann T., 2004, "Production of pie crusts", AIB Technical Bulletin, Vol. XXVI, issue 9). To create the layering effect, the fat needs to be semi-solid when incorporated in the dough. Because the fat needs to be semi-solid, shortening is the most common fat used in pie dough. As a result of the use of shortening, pie crusts have a high saturated fat content, typically 9% (w/w) or more. This high saturated fat content of pie crusts is considered unhealthy by the consumers. Completely replacing the shortening in pie crust formulations with a liquid fat, rich in unsaturated fatty acids, such as vegetable oil, results in a loss of flakiness. For this reason the food industry needs ingredient-based solutions to reduce saturated fat in pie crust formulations which would maintain the textural and sensory attributes of the pie.

Stankus et al. in US Pat. No. 5,576,043 teach a pie crust comprising, "flour 55.63%, shortening 13.32%, shortening substitute 13.32%". The shortening substitute consists of "modified starch 14.14%, unmodified starch 7.86%, emulsifiers 4%, plasticizers 0.5%, 4% shortening, water 69.5%". The reference states "the pregelatinized modified high amylopectin starch used in the present invention is a chemically modified high amylopectin starch" and "[t]he chemical modification is either a crosslinked, hydroxypropylated starch or a crosslinked, esterified starch." Paulus et al. in US Patent Pub. No. 2010/0310747 A1 teach a roll formulation containing 23.21% heat-moisture treated rice flour, 5.8% heat-moisture treated tapioca flour, 7.95% butter, and 0.50% of an OSA substituted starch. They also teach a pie crust formulation containing 21.52% heat-moisture treated rice flour, 32.28% tapioca flour, and 29.89% shortening. Kao *et al.* in US Patent Pub. No. US 2005/0112272 A1 teach cake formulations containing 42.7% cake flour, 5.8% to 14.2% OSA substituted starch, but no fat. Sarneel in US Pat. No. 6,663,909 B2 teaches a bakery product comprising 20-65% (w/w) untreated flour, 1-21% (w/w) starch n-alkenyl succinate, 15-40% (w/w) egg, but again no fat. Sarneel et al. in US Patent Pub. No. 2006/0233931 A1 teach a bakery product comprising 10-20% w/w flour; 1-15% w/w starch n-octenyl succinate; 0-40% w/w egg, but again no fat. Peleg et al. in US Pat. No. 5,766,664 teach a pie crust dough containing between about 55%-65% by weight flour, a preferred 6%-12% by weight of a "fat component", and a preferred 2%-6% by weight added starch. By "fat component", they mean "an aqueous emulsion of liquid vegetable oil and a plastic animal and/or vegetable fat. Preferably the aqueous emulsion contains approximately equal amounts of the liquid vegetable oil and the plastic fat, with the liquid oil and plastic fat together constituting between about 65%-85% by weight of the emulsion." This includes canola oil. By starch they mean "[a]ny suitable starch ... such as wheat flour starch, com starch, tapioca starch, potato starch, chemically modified starches, and combinations thereof." Sarneel et al. in US Patent Pub. No. 2008/0274254 A1 teach a biscuit dough comprising refined palm oil 12%, n-alkenyl succinate starch 0.9%, and flour 60%.

### SUMMARY

In one aspect the application provides a composition comprising from about 2% (w/w) to about 4% (w/w) alkenyl succinic anhydride substituted starch, from about 3% (w/w) to about 8% (w/w) heat-moisture treated wheat flour, from about 5% (w/w) to about 7% (w/w) vegetable oil, and from about 78% (w/w) to about 87% (w/w) of other conventional baking ingredients.

### BRIEF DESCRIPTION OF THE DRAWINGS

Fig. 1 depicts a flow diagram for preparing dual-crusted fruit filled apple pie.

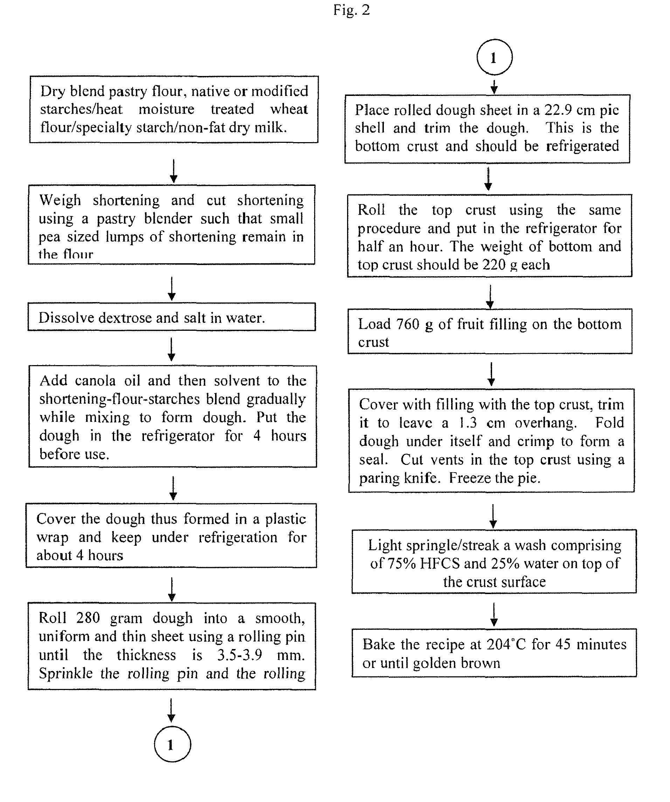

Fig. 2 depicts an alternative flow diagram for preparing dual-crusted fruit filled apple pie.
Fig. 3 depicts baked apple pies.

### DETAILED DESCRIPTION

In one aspect the application provides a composition comprising from about 2% (w/w) to about 4% (w/w) alkenyl succinic anhydride substituted starch, from about 3% (w/w) to about 8% (w/w) heat-moisture treated wheat flour, from about 5% (w/w) to about 7% (w/w) vegetable oil, and from about 78% (w/w) to about 87% (w/w) of other conventional baking ingredients.

In one embodiment the application provides the composition comprising from about 2% (w/w) to about 4% (w/w) alkenyl succinic anhydride substituted starch, from about 6% (w/w) to about 8% (w/w) heat-moisture treated wheat flour, from about 5% (w/w) to about 7% (w/w) vegetable oil, and from about 81% (w/w) to about 87% (w/w) of other conventional baking ingredients.

In one embodiment the application provides the composition comprising from about 2.5% (w/w) to about 3.5% (w/w) alkenyl succinic anhydride substituted starch.

In one embodiment the application provides the composition comprising from about 2.75% (w/w) to about 3.25% (w/w) alkenyl succinic anhydride substituted starch.

In one embodiment the application provides the composition comprising about 3% (w/w) alkenyl succinic anhydride substituted starch.

In another embodiment the application provides the composition wherein the alkenyl succinic anhydride substituted starch is n-octenyl succinic anhydride (OSA) substituted starch.

In another embodiment the application provides the composition wherein the alkenyl succinic anhydride substituted starch is alkenyl succinic anhydride substituted waxy maize starch.

In another embodiment the application provides the composition wherein the alkenyl succinic anhydride substituted starch is n-octenyl succinic anhydride (OSA) substituted waxy maize starch.

In one embodiment the application provides the composition comprising from about 6% (w/w) to about 8% (w/w) heat-moisture treated wheat flour.

In one embodiment the application provides the composition comprising from about 6.5% (w/w) to about 7.5% (w/w) heat-moisture treated wheat flour.

In one embodiment the application provides the composition comprising from about 6.75% (w/w) to about 7.25% (w/w) heat-moisture treated wheat flour.

In one embodiment the application provides the composition comprising about 7% (w/w) heat-moisture treated wheat flour.

In one embodiment the application provides the composition comprising from about 5.5% (w/w) to about 6.5% (w/w) vegetable oil.

In one embodiment the application provides the composition comprising from about 5.75% (w/w) to about 6.25% (w/w) vegetable oil.

In one embodiment the application provides the composition comprising about 6% (w/w) vegetable oil.

In one embodiment the application provides the composition wherein the vegetable oil is canola oil.

In one embodiment the application provides the composition in the form of a pie crust.

In one embodiment the application provides the composition after baking.

In one aspect the application provides a composition comprising from about 2% (w/w) to about 4% (w/w) of a specialty blend, from about 5.5% (w/w) to about 7.5% (w/w) vegetable oil, and from about 88.5% (w/w) to about 92.5% (w/w) of other conventional baking ingredients; wherein the specialty blend consists essentially of about 38% (w/w) to about 48% (w/w) non-fat dry milk, about 25% (w/w) to about 33% (w/w) polyglycerol esters, about 22% (w/w) to about 29% (w/w) chemically modified maize starch or starches, and about 1.1% (w/w) to about 2.1% (w/w) guar gum.

In one embodiment the application provides the composition comprising from about 2.5% (w/w) to about 3.5% (w/w) of a specialty blend.

In one embodiment the application provides the composition comprising from about 2.75% (w/w) to about 3.25% (w/w) of a specialty blend.

In one embodiment the application provides the composition comprising about 3% (w/w) of a specialty blend.

In one embodiment the application provides the composition comprising from about 6% (w/w) to about 7% (w/w) vegetable oil.

In one embodiment the application provides the composition comprising from about 6.25% (w/w) to about 6.75% (w/w) vegetable oil.

In one embodiment the application provides the composition comprising about 6.5% (w/w) vegetable oil.

In one embodiment the application provides the composition wherein the vegetable oil is canola oil.

In one embodiment the application provides the composition in the form of a pie crust.

In one embodiment the application provides the composition after baking.

In one embodiment the application provides the composition wherein the other conventional baking ingredients comprise non-fat dry milk powder.

In another embodiment the application provides the composition wherein the non-fat dry milk powder is from about 0.5% (w/w) to about 4.5% (w/w) of the total composition.

In another embodiment the application provides the composition wherein the non-fat dry milk powder is from about 1.5% (w/w) to about 3.5% (w/w) of the total composition.

In another embodiment the application provides the composition wherein the non-fat dry milk powder is from about 2.25% (w/w) to about 3.75% (w/w) of the total composition.

This application provides solutions for reducing saturated fat and total fat contents in pie crust formulations. Specifically, this application provides a method for reducing saturated and total fat in the pie crusts by replacing a large percentage of the shortening with a combination of native or modified food starches or wheat flour or specialty starch blend and canola oil.

The first example uses a combination of an n-octenyl succinic anhydride (OSA) substituted waxy maize starch, heat-moisture treated wheat flour and canola oil. The second example uses a specialty blend of non-fat dry milk, polyglycerol esters, chemically modified maize starch and guar gum, and canola oil. Mixing and baking conditions for full-fat and reduced fat pie crusts are kept the same for each of these examples.

The resulting pie crusts exhibit similar textural and sensory attributes as the control full-fat pie crust formulation in terms of flakiness, tenderness, and color. It is surprising that a pie crust with such a low content of shortening is flaky, tender, and appealing in color. Each of these examples reduces the percentage shortening in the pie crust formulation from 30.3% (60 bakers %) to as low as 10.5% (20 bakers %). The saturated fat content in pie crusts is reduced from 14% (w/w) to as low as 5% (w/w). The total fat content of the baked pie crusts is reduced from 32% (w/w) to as low as 18% (w/w). The percentage saturated fat calories in the baked pie crusts were reduced from 25.7% in the control to as low as 10% in the examples. By using examples described in this application, a pie manufacturer can reduce saturated and total fat content in their products without sacrificing the product sensory and textural attributes. Ad hoc

### DEFINITIONS

The following definitions and abbreviations are used in connection with the processes of the present application unless the context indicates otherwise. The abbreviation "(w/w)", as used herein, means the true percentage by weight. That is, the weight of the ingredient divided by the total weight in the same units of the composition. The abbreviation "% (w/w)" means the weight of the ingredient divided by the total weight of the composition and converted to a percentage.

"Alkenyl succinic anhydride substituted waxy maize starches", as used herein, are produced from waxy maize starches. Suitable levels of alkenyl succinic anhydride modification are by addition of the alkenyl succinic anhydride reagent in the amount of from about 1% to about 3% (w/w), in one embodiment in an amount from about 1.5% to about 3% (w/w), in one embodiment in an amount from about 2% to about 3% (w/w), and in another embodiment in an amount from about 2.5% to about 3% (w/w), based on the starch. The starch is modified with octenyl succinic anhydride using methods known in the art. Exemplary processes for preparing alkenyl succinic anhydride substituted starches known in the art and are disclosed, for example, in Paulus et al. U.S. Patent Application 2005/0008761 A1 and as described, for example, in "Modified Starches: Properties and Uses", edited by Wurzburg, CRC Press, Inc., Florida (1986) pages 131 to 147. Specific examples of alkenyl succinic anhydride reagents include, but are limited to, isooctadecenyl succinic anhydride, n-octadecenyl succinic anhydride, n-hexadecenyl succinic anhydride, n-dodecyl succinic anhydride, i-dodecenyl succinic anhydride, n-decenyl succinic anhydride, n-octenyl succinic anhydride, or any mixtures thereof. Unsubstituted succinic anhydride may also be used.

The phrase, "conventional baking ingredients", as used herein, include one or more of the following constituents: milk powder; non-fat dry milk powder; gluten; an emulsifier; granulated fat; an oxidant; an amino acid; a sugar; salt; flour such as unbleached flour, bleached flour, plain flour, self-raising flour, pastry flour, enriched flour, acorn flour, almond flour , amaranth flour, atta flour, bean flour, brown rice flour, buckwheat flour, cassava flour, chestnut flour, chickpea flour, chuno flour, coconut flour, corn (maize) flour, glutinous rice flour, hemp flour, maida flour, mesquite flour, noodle flour, nut flours, pea flour, peanut flour, potato flour, rice flour, rye flour, sorghum flour, soy flour, tapioca flour, teff flour, guar seed meal, carob bean meal, or heat-moisture treated wheat flour; a starch such as rice starch, wheat starch, corn starch, potato starch, mung bean starch, banana starch, cassava starch, starch sugars, modified starch, or OSA starch; xanthan gum or gaur gum; carboxymethyl cellulose (CMC); a pectin, an emulsifier; shortening; a vegetable oil; specialty blend; baking powder; baking soda; or water.

The phrase, "heat-moisture treatment", as used herein, means a process in which a subject is heated by using, as a heating medium, saturated steam, or hot water in a high-humidity atmosphere. The subject to be heated may be brought into direct contact with the heating medium or the subject may be brought into indirect contact with the heating medium like an indirect heating system. It is necessary that the base starch have a specified amount of water or moisture content and is heated to a defined temperature. The starch is heated at a moisture content and temperature insufficient to destroy the granular nature of the starch. The total moisture or water content of the starch to be heat treated is typically in a range of from about 10% to about 80% by weight. In one embodiment, the total moisture or water content of the starch to be heat treated is in a range of from about 20% to about 45% by weight. In another embodiment, the total moisture or water content of the starch to be heat treated is in a range of from about 30% to 40% by weight, based on the weight of the dry starch. In particular, this relative level of moisture is maintained during a substantial portion of the heating step.

The starch with specified moisture content is typically heated at a temperature of from about 60° C to about 160° C. In one embodiment, the starch with specified moisture content is heated at a temperature of from about 90° C to 120° C. While the most desirable temperature may vary depending on the particular starch and its amylose content as well as the moisture of the starch, it is important the starch remain in the granular state and not lose its birefringent characteristic. Also, the time of heating can vary depending on the starch used, its amylose content, the amount of moisture in the starch, and the heating temperature of the process. Typically the heating time is from about 0.5 hours to about 24 hours. In one embodiment, the heating time is from about 1 hour to 4 hours. The most desired conditions for heat-moisture treating starch are such that the granular structure of the starch is not destroyed and the granules are still birefringent. Further, there would be evident a Maltese cross when the granular structure of the heat-moisture treated starch is viewed under polarized light.

The phrase, "vegetable oil", as used herein, means for example, almond oil, cotton seed oil, peanut oil, sunflower oil, groundnut oil, hazelnut oil, palm oil, soybean oil, olive oil, corn oil, canola oil, sesame oil, safflower oil, rapeseed oil, or any mixtures thereof.

A "waxy maize starch or flour", as used herein, is a starch or flour containing at least 95% by weight amylopectin.

Certain specific aspects and embodiments of the present application are explained in more detail with reference to the following examples, which are provided only for purposes of illustration and should not be construed as limiting the scope of the application in any manner.

### EMBODIMENTS

The following embodiments are presented to further illustrate and explain the present invention and should not be taken as limiting in any regard.
1. A composition comprising from about 2% (w/w) to about 4% (w/w) alkenyl succinic anhydride substituted starch, from about 3% (w/w) to about 8% (w/w) heat-moisture treated wheat flour, from about 5% (w/w) to about 7% (w/w) vegetable oil, and from about 78% (w/w) to about 87% (w/w) of other conventional baking ingredients.
2. The composition of embodiment 1 comprising from about 2.5% (w/w) to about 3.5% (w/w) alkenyl succinic anhydride substituted starch.
3. The composition of embodiment 1 wherein the alkenyl succinic anhydride substituted starch is n-octenyl succinic anhydride (OSA) substituted starch.
4. The composition of embodiment 3 wherein the alkenyl succinic anhydride substituted starch is n-octenyl succinic anhydride (OSA) substituted waxy maize starch.
5. The composition of embodiment 1 comprising from about 6% (w/w) to about 8% (w/w) heat-moisture treated wheat flour.
6. The composition of embodiment 5 comprising from about 6.5% (w/w) to about 7.5% (w/w) heat-moisture treated wheat flour.
7. The composition of embodiment 6 comprising about 7% (w/w) heat-moisture treated wheat flour.
8. The composition of embodiment 1 comprising from about 5.5% (w/w) to about 6.5% (w/w) vegetable oil.
9. The composition of embodiment 8 comprising from about 5.75% (w/w) to about 6.25% (w/w) vegetable oil.
10. The composition of embodiment 9 wherein the vegetable oil is canola oil.
11. The composition of embodiment 1 in the form of a pie crust.
12. The composition of embodiment 11 after baking.
13. A composition comprising from about 2% (w/w) to about 4% (w/w) of a specialty blend, from about 5.5% (w/w) to about 7.5% (w/w) vegetable oil, and from about 88.5% (w/w) to about 92.5% (w/w) of other conventional baking ingredients; wherein the specialty blend consists essentially of about 38% (w/w) to about 48% (w/w) non-fat dry milk, about 25% (w/w) to about 33% (w/w) polyglycerol esters, about 22% (w/w) to about 29% (w/w) chemically modified maize starch or starches, and about 1.1% (w/w) to about 2.1% (w/w) guar gum.
14. The composition of embodiment 13 comprising from about 2.5% (w/w) to about 3.5% (w/w) of a specialty blend.
15. The composition of embodiment 14 comprising from about 2.75% (w/w) to about 3.25% (w/w) of a specialty blend.
16. The composition of embodiment 13 comprising from about 6% (w/w) to about 7% (w/w) vegetable oil.
17. The composition of embodiment 16 comprising from about 6.25% (w/w) to about 6.75% (w/w) vegetable oil.
18. The composition of embodiment 17 wherein the vegetable oil is canola oil.
19. The composition of embodiment 13 in the form of a pie crust.
20. The composition of embodiment 19 after baking.

### EXAMPLES

### Preparation Procedures for Examples 1, 2 and 3.

1. Weigh shortening and pastry flour.
2. Cut shortening using a pastry cutter.
3. Add starches to prepare a uniform dry blend of flour-shortening pieces and starches.
4. Dissolve baking powder, dextrose and salt in water to prepare a solvent.
5. Add canola oil and then solvent to the shortening-flour-starches blend gradually while mixing to form dough. Put the dough in the refrigerator for 4 hours before use.
6. Roll about 300 g of dough into a smooth, uniform and thin sheet using a rolling pin. Sprinkle the rolling pin and the rolling surface with dry pastry flour for the ease of rolling.
7. Place rolled dough sheet in a 22.9 cm pie shell and trim the dough. This is the bottom crust and should be refrigerated for half an hour before loading the fruit filling
8. Roll the top crust using the same procedure and put in the refrigerator for half an hour.
9. Load apple filling on the bottom crust.
10. Cover with filling with the top crust, trim it to leave a 1.3 cm overhang. Fold dough under itself and crimp to form a seal. Cut vents in the top crust using a paring knife. Freeze the pie.
11. Light Sprinkle/streak a wash comprising of 75% high-fructose corn syrup and 25% water on top crust surface.
12. Bake the recipe at 204 °C for 45 minutes or until golden brown.

The following table describes the formulations used in the above mentioned compositions.

**Table 1: Pie Crust formulations.**

| | Control | | Example 1 | | Example 2 | | Example 3 | | Example 4 | |
|---|---|---|---|---|---|---|---|---|---|---|
| Ingredient | true % (w/w) | baker's % (w/w) | true % (w/w) | baker's % (w/w) | true % (w/w) | baker's % (w/w) | true % (w/w) | baker's % (w/w) | true % (w/w) | baker's % (w/w) |
| pastry flour | 50.47 | 100.00 | 51.10 | 100.00 | 54.96 | 100.00 | 51.59 | 100.00 | 55.63 | 100.00 |
| shortening | 30.28 | 60.00 | 10.22 | 20.00 | 10.99 | 20.00 | 10.32 | 20.00 | 13.32 | 23.94 |
| shortening substitute* | 0.00 | 0.00 | 0.00 | 0.00 | 0.00 | 0.00 | 0.00 | 0.00 | 13.32 | 23.94 |
| canola oil | 0.00 | 0.00 | 5.88 | 11.50 | 6.32 | 11.50 | 5.93 | 11.50 | 0.00 | 0.00 |
| OSA starch | 0.00 | 0.00 | 2.91 | 5.70 | 0.00 | 0.00 | 2.94 | 5.70 | 0.00 | 0.00 |
| heat-moisture treated wheat flour | 0.00 | 0.00 | 6.82 | 13.35 | 0.00 | 0.00 | 3.44 | 6.67 | 0.00 | 0.00 |
| specialty blend** | 0.00 | 0.00 | 0.00 | 0.00 | 2.92 | 5.31 | 0.00 | 0.00 | 0.00 | 0.00 |
| non-fat dry milk | 0.00 | 0.00 | 0.00 | 0.00 | 0.00 | 0.00 | 2.48 | 4.81 | 0.00 | 0.00 |
| baking powder | 0.50 | 1.00 | 0.51 | 1.00 | 0.55 | 1.00 | 0.52 | 1.00 | 0.00 | 0.00 |
| cold water | 15.14 | 30.00 | 17.88 | 35.00 | 19.23 | 35.00 | 18.06 | 35.00 | 17.14 | 30.81 |
| salt | 0.96 | 1.90 | 0.89 | 1.74 | 0.96 | 1.74 | 0.90 | 1.74 | 0.59 | 1.06 |
| dextrose | 2.63 | 5.22 | 3.79 | 7.41 | 4.07 | 7.41 | 3.82 | 7.41 | 0.00 | 0.00 |
| SUM | 100.00 | 198.12 | 100.00 | 195.70 | 100.00 | 181.96 | 100.00 | 193.83 | 100.00 | 179.75 |

| | | | | | | | | | | |
|---|---|---|---|---|---|---|---|---|---|---|
| * mixture of modified food starch, unmodified food starch, emulsifiers, plasticizers, and shortening. See Example 4 ** mixture of non-fat dry milk, polyglycerol esters, chemically modified maize starch or starches, and guar gum. | | | | | | | | | | |

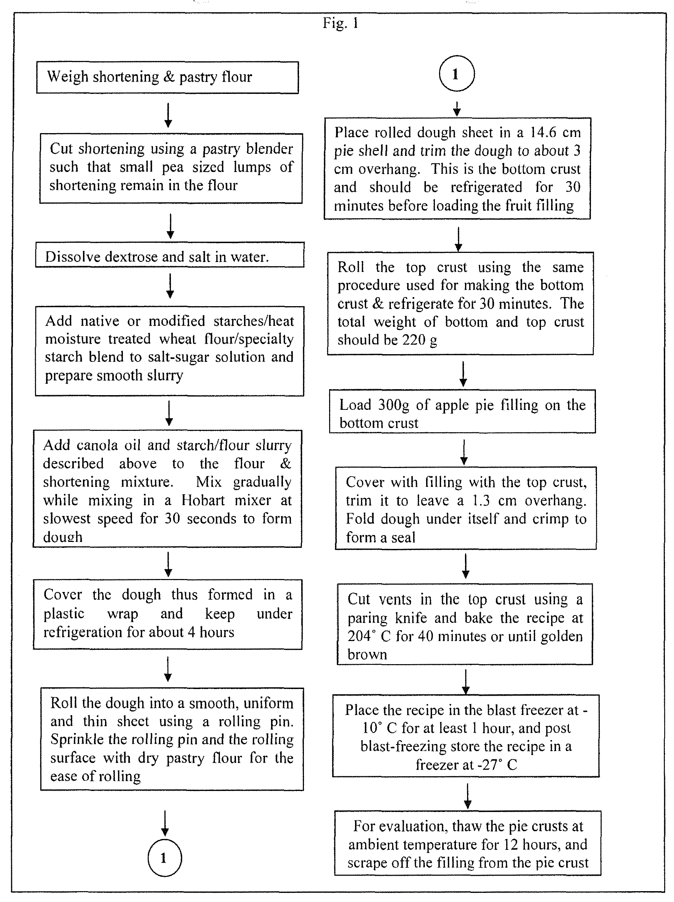

Fig. 1 shows the procedure for preparing dual-crusted fruit filled apple pie.

### Preparation Procedure for Example 4.

**Table 2: Shortening Substitute.**

| Ingredient | | ratio | true % in final blend (w/w) | baker's % (in final blend w/w) |
|---|---|---|---|---|
| modified food starch | | 100 | 1.20 | 2.16 |
| unmodified food Starch | | 56 | 0.67 | 1.20 |
| emulsifiers | | | | |
| | mono and diglycerides | 71 | 0.85 | 1.53 |
| | polyglycerol ester of fatty acid | 18 | 0.21 | 0.38 |
| plasticizers | | | | |
| | glycerin | 5.8 | 0.07 | 0.12 |
| | maltodextrin 10DE | 111 | 1.33 | 2.39 |
| shortening | | 89 | 1.07 | 1.92 |
| water | | 661 | 7.93 | 14.24 |
| SUM | | ---- | 13.32 | 23.94 |

### Preparation procedure for shortening substitute.

1. Place water in the mixer.
2. Blend two starches and mix them in water.
3. Wait 15 minute for fully hydration; combine shortening and emulsifier, and melt to liquid.
4. Mix melted oil with hydrated starch; add glycerin; form oil-in-water emulsion
5. Store in refrigerator for 12 hours.

### Preparation Procedures for Example 4.

1. Cut shortening in the pastry flour using a pastry cutter.
2. Mix the shortening substitute into the flour and shortening with Hobart mixer.
3. Dissolve salt in water and then add the water into the mixing bowl to form the pie dough.
4. The rest the procedures are the same as steps 6-12 in preparation procedure for Examples 1, 2, and 3.

### RESULTS

Example 1: This example involved using a combination of an n-octenyl succinic anhydride (OSA) substituted waxy maize starch, heat-moisture treated wheat flour, and canola oil at 2.91%, 6.82% and 5.88%, respectively, in the pie crust formulation. The OSA substituted starch is cold water soluble, hydrophobic in nature, and provides emulsification properties. Heat-moisture treated functional wheat flour provides the smoothness and stabilization, while canola oil functions as a fat source and contributes to the tenderness of the pie crust. This formulation resulted in a pie crust exhibiting similar flakiness as the control, crunchy texture and the product dissolved easily on the palette. The water activity and machinability of the pie dough were similar to the control. The percentage saturated fat calories in the baked pie crusts were reduced from 25.7% in the control to 10% in the example. The total fat in the baked pie crust was reduced from 32% in the control to 18% in the example.

Example 2: This example involved using a specialty blend of non-fat dry milk, polyglycerol esters, chemically modified maize starch, and guar gum. The shortening in the pie crust formulation was reduced by using a combination of this specialty blend and canola oil at 2.92% and 6.32%, respectively. The specialty blend imparts tenderness to the pie crust and the resulting pie crust was softer with crispy texture though less flaky than the full-fat control. The water activity of the pie crusts was similar to control and Example 1. The dough was stickier and softer as compared to the control which could be attributed to presence of non fat dried milk and guar gum in the specialty blend. The percentage saturated fat calories in the baked pie crusts were reduced from 25.7% in the control to 11.7% in the example. The total fat in the baked pie crust was reduced from 32% in the control to 21% in the example.

Example 3: This example involved using a combination of an n-octenyl succinic anhydride (OSA) substituted waxy maize starch, heat-moisture treated wheat flour, non-fat dry milk and canola oil at 2.94%, 3,44%, 2.48%, and 5.93%, respectively, in the pie crust formulation. The OSA substituted starch is cold water soluble, hydrophobic in nature, and provides emulsification properties. Heat-moisture treated functional wheat flour provides the smoothness and stabilization. Non-fat dry milk provides tenderness while canola oil functions as a fat source and contributes to the tenderness of the pie crust. This formulation resulted in a pie crust exhibiting similar flakiness as the control, crispy and tender texture, and the product dissolved easily on the palette. The water activity and machinability of the pie dough were similar to the control. The percentage saturated fat calories in the baked pie crusts were reduced from 25.7% in the control to 10% in the example. The total fat in the baked pie crust was reduced from 32% in the control to 19% in the example.

The following table describes the physico-chemical and sensory characteristics of four of the pie crust formulations. As mentioned in the procedure, the pie crusts were evaluated after thawing the dual-crusted filled apple pies at room temperature for at least 12 hours, and scrapping-off the apple filling.

**Table 2: Physico-chemical and sensory attributes of pie crust formulations.**

| | Control | Example 1 | Example 2 | Example 3 |
|---|---|---|---|---|
| % shortening in pie dough | 30.28 | 10.22 | 10.99 | 10.32 |
| % total fat in baked pie crust | 32 | 18 | 21 | 19 |
| % saturated fat calories in baked pie crust | 25.7 | 10 | 11.7 | 10 |
| water activity (pie dough) | 0.902 | 0.906 | 0.905 | 0.906 |
| dough machinability | good | comparable to control | stickier & softer than control | closest to control |
| texture evaluation comments | flaky, crunchy, dissolves very easily on the palette | flakiness similar to control, crunchy, dissolves well on the palette | less flakier than control, Crispy, Softer than control, dissolves well on the palette | flakiness closest to control, crunchy, tender, dissolves well on the palette |

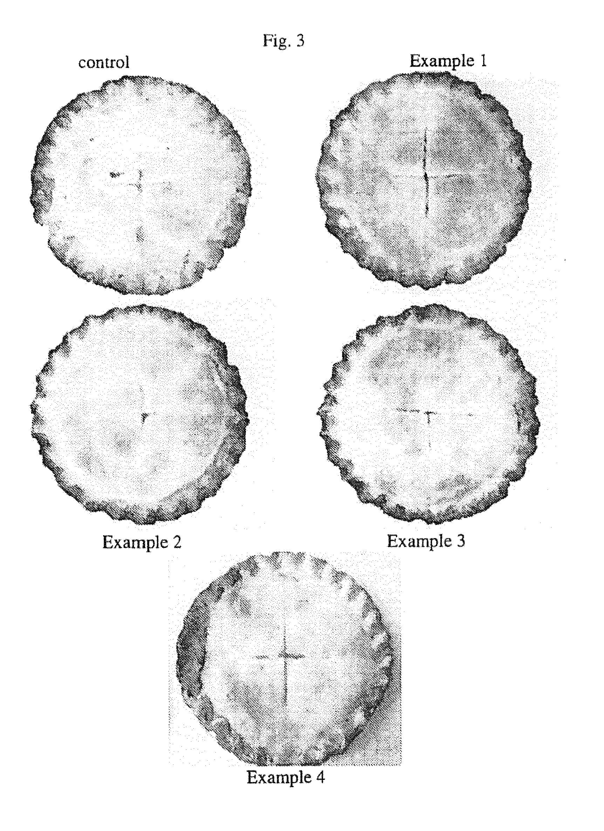

Example 4. Sensory Evaluation Procedures. Stankus et al. in US Pat. No. 5,576,043, which is are hereby incorporated by reference in its entirety, teach a shortening substitute for bakery products using a combination of pregelatinized unmodified starch, pregelatinized, modified high amylopectin starch, emulsifier, shortening, and water. A pie was prepared using this shortening substitute using the ingredients as listed in Table 4. This used the same pastry flour, shortening, salt, and cold water as Examples 1, 2, and 3. The shortening substitute was used rather than the alkenyl succinic anhydride substituted starch, the heat-moisture treated wheat flour, and the vegetable oil of Examples 1, 2, and 3. The qualitative evaluation involved eating the pie crust to evaluate for texture, taste, and mouth feel in comparison to control pie crust. The appearance evaluation involved closely looking at the pies and their characteristics, including crust color and shrinkage compared to control and to the reduced fat pie crusts of the present application. As can be seen from Fig. 3 and Table 3 the substitute shortening produced a pie with a crust having an unattractive appearance and dry, tough texture.

**Table 3 Sensory attributes of pie crust formulations**

| Sample Description | Control | Example 2 | Example 3 | Example 4 |
|---|---|---|---|---|
| Appearance - Surface | typical flaky surface | less flaky than control | less flaky than control, more flaky than Example 2 | smooth; very unlike control, Example 2 or Example 3; elastic dough, different than short pie crust dough |
| Appearance - Shrinkage | none | none | none | none |
| Appearance - Color | golden brown across entire surface | golden brown across entire surface | golden brown across entire surface | pale in color; looks slightly raw |
| Sensory - Qualitative | flaky, crispy, crunchy, tender, good melt-away | crispy, crunchy, tender less flaky than control | crispy, crunchy, less flaky than control, more flaky than Example 2 | dry, not flaky, tough, hard to chew, similar to pizza crust |

This application provides three examples of reduced percentage of shortening in the pie crust formulations from 30.28% (w/w) to as low as 10.22% (w/w). The detailed formulations are shown in Table 1. The procedure used for preparing the pies is shown in Fig. 1. A comparison of physico-chemical and sensory attributes of the baked pie crusts is provided in Table 2. The photographs of the baked pie crusts are shown in Fig. 1.

Throughout this application, various publications are referenced. The disclosures of these publications in their entireties are hereby incorporated by reference into this application in order to more fully describe the state of the art as known to those skilled therein as of the date of the application described and claimed herein. While particular embodiments of the present application have been illustrated and described, it would be obvious to those skilled in the art that various other changes and modifications can be made without departing from the spirit and scope of the application. It is therefore intended to cover in the appended claims all such changes and modifications that are within the scope of this application.

## Claims

1. A composition comprising from about 2% (w/w) to about 4% (w/w) alkenyl succinic anhydride substituted starch, from about 3% (w/w) to about 8% (w/w) heat-moisture treated wheat flour, from about 5% (w/w) to about 7% (w/w) vegetable oil, and from about 78% (w/w) to about 87% (w/w) of other conventional baking ingredients.

2. The composition of claim 1 comprising from about 2.5% (w/w) to about 3.5% (w/w) alkenyl succinic anhydride substituted starch.

3. The composition of claim 1 or 2 wherein the alkenyl succinic anhydride substituted starch is n-octenyl succinic anhydride (OSA) substituted starch.

4. The composition of claim 3 wherein the alkenyl succinic anhydride substituted starch is n-octenyl succinic anhydride (OSA) substituted waxy maize starch.

5. The composition of any one of claims 1-4 comprising from about 6% (w/w) to about 8% (w/w) heat-moisture treated wheat flour.

6. A composition comprising from about 2% (w/w) to about 4% (w/w) of a specialty blend, from about 5.5% (w/w) to about 7.5% (w/w) vegetable oil, and from about 88.5% (w/w) to about 92.5% (w/w) of other conventional baking ingredients; wherein the specialty blend consists essentially of about 38% (w/w) to about 48% (w/w) non-fat dry milk, about 25% (w/w) to about 33% (w/w) polyglycerol esters, about 22% (w/w) to about 29% (w/w) chemically modified maize starch or starches, and about 1.1% (w/w) to about 2.1% (w/w) guar gum.

7. The composition of any one of claims 1-6, wherein the vegetable oil is canola oil.

8. The composition of any one of claims 1 - 6 in the form of a pie crust.

9. The composition of claim 8 after baking.
